# EUROPEAN PATENT APPLICATION

(11) **EP 2 883 596 A1**
(43) Date of publication of application: **17.06.2015**
(21) Application number: 13196723.4
(22) Date of filing: 11.12.2013
(51) Int. Cl.: B01D 61/18, B01D 63/04

(54) **Filter system and vessel for the filter system**

(71) Applicant: Siemens Aktiengesellschaft, 80333 München (DE)
(72) Inventor: Diaz Mesa, Armando, 0676 Osol (NO); Mehlen, Mari, 0591 Oslo (NO)

(57) **Abstract**

It is described a vessel (101, 401), comprising: an internal space (109, 409) for harbouring plural arrangements (113) for filtering water (251); a port (111, 411) at a bottom side for allowing entry of air (123,423) into the internal space (109, 409) partially filled with water during a procedure for cleaning the plural arrangements (113, 413) for filtering water; an air distribution structure (121, 421) enclosing the port (111, 411) and adapted to distribute air (123, 423) introduced via the port for reaching the plural arrangements (113, 413) for filtering water across a larger area than, in particular five times, a cross sectional area of the port (111, 411).

## Description

### Field of invention

The present invention relates to a vessel to be used in a filter system, to a method for cleaning a filter system and to a filter system comprising the vessel.

### Art Background

In an oil/gas exploration application it may be necessary to filter seawater which is to be injected into a bore well. For this purpose, an ultra-filtration membrane vessel has been used which comprises a number of filter elements which are comprised of plural straws which are arranged side by side and parallel to each other. For cleaning the filter elements, air may be introduced or injected into the vessel, in order to create turbulence by air bubble enriched water. Conventionally, air injection into the vessel occurs only at the center of the vessel bottom.

It has been observed that the cleaning performance of the filter elements of a filter system in particular an ultra-filtration membrane vessel is not under all conditions sufficient. Therefore, there may be a need for a vessel (to be used in a filter system) for a method for cleaning a filter system and for a filter system which may improve a cleaning performance of filter elements disposed within the vessel or which may improve a filter system, a vessel or a cleaning method in other regards.

### Summary of the Invention

This need may be met by the subject matter according to the independent claims. Advantageous embodiments of the present invention are described by the dependent claims.

According to an embodiment of the present invention, it is provided a vessel (or container) comprising an internal space for harbouring plural arrangements for filtering water, a port (entry and/or exit opening) at a bottom side for allowing entry of air into the internal space partially filled with water during a procedure for cleaning the plural arrangements for filtering water, and an air distribution structure enclosing (or surrounding) the port and adapted to distribute air introduced via the port for reaching the plural arrangements for filtering water across a larger area than a cross sectional area of the port.

The vessel may be manufactured from glass reinforced epoxy (GRE). The vessel may have a shape of a cylinder having cylindrically shaped sidewall portions. The vessel may have a diameter between 1 m and 2 m and may have a height between 2 m and 4 m. The vessel may at least approximately have a cylindrical symmetry or rotational symmetry having a symmetry axis in the height direction. During a filtering operation, the vessel harbouring the plural filter elements may be completely filled with water to be filtered, in particular seawater. For this purpose, the seawater may enter the internal space of the vessel via the port at the bottom side. The unfiltered water, in particular seawater, may then pass through fine pores of the plural filter elements in order to reach inside channels of the filter elements. The filtered water may be conveyed along the inside channels of the filter elements upwards and may be released from the vessel via a top port.

In an embodiment, the air distribution structure may be adapted to distribute air across an area that is at least 2, 3, 4 or even 5 times larger than the cross sectional area of the port. Preferably, the air is distributed across an area that is at least five times larger than the cross sectional area of the port.

During a cleaning method according to an embodiment of the present invention, the vessel may only partly filled with water and air may be introduced into the vessel via the port at the bottom side. The air introduced or injected via the port at the bottom side may result in air bubble enriched water to which the plural filter elements may be exposed. Thereby, the air bubble enriched water may agitate or shake or vibrate the plural filter elements causing any particles adhering at the outside surfaces of the filter elements to be released or to fall off. The filter element may be arranged within the internal space of the vessel across an entire cross-sectional area. Thus, filter elements may not only arranged at a center (close or at the symmetry axis) of the vessel but may also be arranged radially farther away from the symmetry axis, in particular at a radial position far apart from the position of the port at the bottom side which may be located on or close to the symmetry axis. For an advantageous distribution of the air entering via the bottom side, the air distribution structure is designed to extend the area across which air reaches the filter elements. In particular, the area at which air enters the internal space is widened compared to the case when only the port at the bottom side is present. In particular, a radial extension of locations of air bubbles is enlarged or widened by the air distribution structure enclosing the port via which the air enters the internal space of the vessel. Without the air distribution structure, the (radial) extent of the air bubbles would be the cross-sectional area of the port which would possibly slightly enlarged when the air bubbles rise within the internal space of the vessel. However, by arranging the air distribution structure enclosing the port and above the port, the widening and enlargement of the extent of the air bubbles may be further increased such that when the air bubbles reach a level of end portions of the filter elements, 50 to 100%, in particular 70 % to 100 %, of the filter elements are exposed (in particular along their entire length) to air bubbles. In particular, by appropriately designing the air distribution structure, each filter element (regardless of its radial position) is exposed to a substantially same or at least similar amount of air bubbles. Thereby, not only those filter elements which are arranged close or at the center of the vessel (close or at the symmetry axis of the vessel) are effectively cleaned during the cleaning procedure but also the filter elements which are arranged at larger radial positions from the symmetry axis. Thereby, the cleaning of the filter elements may be more even thus resulting in a better performance of a filtering process which may be performed subsequent to the cleaning process.

In the prior art, when air injection into the vessel occurred only at the center of the vessel bottom, there was the concern that the air distribution to the vessel edge (or at high radial distances from the symmetry axis) may be too poor and only a few membrane elements or filter elements may get sufficient air scouring. Furthermore, by providing the air distribution structure within the vessel, a problem may be remedied in that conventionally the center membranes of centrally arranged filter elements may obtain too much air bubbles during the air scouring and might be broken by the strong scouring in conventional systems. Therefore, according to embodiments of the present invention, the amount of air rising within the vessel is re-distributed such as to reduce the amount of air at (radial) locations (or close to these locations) where the port is located and increase the amount of air at radial positions apart from the (position of the) port.

In particular, the port (or vessel opening) at the bottom side may have a same dimension as the inlet pipe. An inlet pipe (to be connected with the port) is the last part of a longer pipe guiding fluid into the vessel. The vessel has to be produced with nozzles with flanges for connection to both inlet and outlet piping so it can be built into a complete filtration system. Thereby, in a conventional system, a very concentrated airflow to filter elements placed close to the center or symmetry axis may occur.

According to embodiments of the present invention, the air distribution structure may distribute the air evenly to all arrangements for filtering water (each comprising plural filter elements (also called straws) and a seal) arranged within the internal space of the vessel. At the same time, there may be no restriction for the vessel drain after the backwash. In particular, the cleaning procedure may involve, after exposing the filter elements (comprised in the arrangements for filtering water) to the air bubble enriched water, to drain the water which may now contain particles which have been released from the filter elements due to the air bubble enriched water. Thereby, two requirements to perform an effective cleaning may be combined by the provision of the air distribution structure within the vessel.

An effect of the present invention may be an improved cleaning of the membranes or filter elements and in particular an even or a more even cleaning of all filter elements (comprised in all arrangements for filtering water) throughout the whole vessel diameter.

According to an embodiment of the present invention, the air distribution structure is adapted to retain a portion of the air entered through the port from reaching first filter elements and to direct the portion of the air to second filter elements radial farther away from the (radial position of the) port than the first filter elements.

To retain a portion of the air entered through the port from reaching first filter elements, the air distribution structure may comprise one or more (in particular partially perforated) wall elements which may at least partially prohibit passage of air therethrough. Nevertheless, the one or more wall portions arranged close to the symmetry axis may comprise one or more air passages (or through holes) so that at least a portion of the air can also reach the first filter elements. Nevertheless, not the complete amount of air entered through the port is allowed to reach the first filter elements but also a portion of the air is directed to the second filter elements through one or more air passages in other wall portions arranged radially farther apart from the symmetry axis. The wall portions of the air distribution structure may have any shape, for example plane portions, curved portions and may have changing number or changing sizes of air passages at different radial positions.

According to embodiments of the present invention, the air distribution structure may resemble an umbrella that may fulfil the need for air distribution. Thereby, the size of the holes along the surface of the umbrella may be defined, in order to give an even distributed airflow per area across the entire vessel (diameter of cross-sectional area).

According to an embodiment of the present invention, the air distribution structure comprises a retaining wall or portion of a shell comprising plane and/or curved portions, in particular of a spherical shell, in particular umbrella shaped, wherein the portion of the shell has air passages, in particular having a width (or cross-sectional diameter) between 25 mm and 50 mm.

According to an embodiment of the present invention, a ratio between a sum of cross sectional areas of air passages in an area portion of the air distribution structure and the area portion of the air distribution structure increases with increasing radial distance from the port.

Thereby, the air distribution structure may be comprised of wall portions which have (in a ring area at a particular radial position) an area of air passages which increases relative to the area (of the ring) of the wall portion in a radial direction. Thereby, air approaching the air distribution structure at small radial distances (from the radial position of the port, which may be zero) is prohibited from passing through the air distribution structure in a higher degree than air approaching the air distribution structure at larger radial distances (from the radial position of the port). As an effect, exposing the plural filter elements arranged at different radial positions with air bubbles may be more even.

According to an embodiment of the present invention, a number of air passages and/or a width of the air passages increases with increasing radial distance from the port.

According to an embodiment of the present invention, the width of the air passages (in dependence of the radial position of the respective air passage) is constant but the number of air passages increases with increasing radial position of the respective air passage. Thereby, manufacturing of the air distribution structure may be simplified, since the air passages may be made by drilling using a single drill size. Drill positions may be calculated based on air flow simulation, e.g.

According to another embodiment of the present invention, the number of air passages (in dependence of the radial position of the respective air passage) is constant but the width (or cross-sectional size or diameter) of the air passage (in dependence of the radial position of the respective air passage) increases with increasing radial position. In this case, manufacturing of the air distribution structure may be simplified, in that air passages at a particular radial position may be made by drilling using a drill size associated with that radial position and other air passages at another radial position may be made by drilling using another drill size associated with the other radial position.

According to another embodiment of the present invention, both the number of air passages and the width of air passages increases with increasing radial position of the respective air passage.

According to an embodiment of the present invention, the air distribution structure has a circular edge attached at an inside of the vessel around the port.

Thereby, the whole vessel may be strengthened and the air distribution structure may be firmly secured at the vessel. Furthermore, distribution of the air may be more accurately controlled, since no air can enter the internal space of the vessel where the filter elements are arranged without being guided by the air distribution structure and their respective air passages. In particular, the air distribution structure is sealed at the circular edge where it is attached to the inside of the vessel.

According to an embodiment of the present invention, an air injector is arranged below the air distribution structure at the port, the air injector supporting the air distribution structure at a center of the air distribution structure, in particular at a portion of the air distribution structure farthest away from the port in a flow direction of the air through the port. The air injector may function as an injector for air and/or water and may also be used as an outlet during draining the vessel.

Therefore, the port at the bottom side may serve different functions in different operation modes of the vessel or filter system.

According to an embodiment of the present invention, the air injector has a conical shape tapering for larger axial distances from the port.

The conical shape may lead to an effective injection of air and/or water into the internal space of the vessel.

According to an embodiment of the present invention, a central bar is arranged at a central longitudinal axis of the vessel for supporting at least one plate through which the plural arrangements for filtering water run, wherein in particular the air distribution structure is made of glass reinforced epoxy, further in particular integrally formed with the central bar.

The central bar may strengthen the mechanical stability of the vessel and may in particular support three plates through which the plural filter elements run. Using integrally formed glass reinforced epoxy may simplify the manufacturing.

According to an embodiment of the present invention, it is provided a method for cleaning a filter system, the method comprising providing an internal space for harbouring plural arrangements for filtering water for filtering water, allowing entry of air into the internal space partially filled with water via a port, distributing, via an air distribution structure enclosing the port, the air introduced via the port for reaching the plural arrangements for filtering water across a larger area than, in particular five times, a cross sectional area of the port.

It should be understood that features individually or in any combination disclosed, described, provided or employed for a vessel according to an embodiment of the present invention may also be applied to a method for cleaning a filter system or to a filter system according to embodiments of the present invention and vice versa.

The method for cleaning a filter system may be performed using a filter system according to an embodiment of the present invention. Furthermore, the filter system according to an embodiment of the present invention may, in another operation mode, be used in a method for filtering water. In particular, after having completed a method for filtering seawater, the vessel may be partially drained from the seawater so that the vessel may be filled with water half to 2/3 of the volume of the internal space of the vessel. Thereafter, air may be injected into the vessel from the port at the bottom side. The introduced air is then distributed via the air distribution structure, in order to widen the cross-sectional area or area of the air bubbles within the internal space of the vessel.

According to an embodiment of the present invention, it is provided a filter system for filtering water, in particular for injection into a bore well, the arrangement comprising a vessel according to one of the preceding embodiments; at least one plurality of filter elements arranged side by side, each filter element comprising a tube having fine pores, allowing water to enter an inside channel of the tube but preventing particles having a size larger than a threshold size to enter the inside channel, wherein the plurality of filter elements being arranged above the air distribution structure; (for each of the at least one plurality of filter elements) a seal system for closing the channels of the tubes at longitudinal ends of the respective tubes, wherein the seal system has at least one opening providing communication between an outside of the plurality of filter elements and an inside of the plurality of filter elements, the inside of the plurality of filter elements being surrounded by tubes but being outside the channels of all the tubes.

The filter system may be adapted to perform the method for cleaning a filter system according to an embodiment of the present invention.

An arrangement for filtering water (by those skilled in the art also called (cylindrical) membrane element comprising plural straws) may comprise a plurality of filter elements (also called straws) and the respective seal system. Thus, the vessel may contain plural arrangements for filtering water.

One membrane element (e.g. total diameter between 100 mm and 140 mm) may comprises 5000 to 8000 straws, having a length between 1.5 m and 2.5 m, in particular about 1.8 m. The straws may be surrounded by a PVC grid as a support structure. A straw may be 1.0 mm to 1.4 mm in diameter, with an inner diameter (of the inside channel) of 0.5 mm to 0.7 mm. The seal or potting may have length of between 7 cm and 10 cm.

The arrangement for filtering water may in particular be suitable for filtering seawater, wherein the filtered seawater may then be used for injection into a bore well or oil well in order to perform oil and/or gas exploration and/or conveying. Each filter element may also be referred to as a membrane cylinder and may comprise membrane straws (also referred to as tubes) which are (relatively) densely packed close to each other, however with some same in between. In particular, the tube of the filter element may also be referred to as a straw. The tube or the straw may be made of or may comprise membrane material, in particular fiber membrane material. The fine pores may be adapted regarding their (passage) sizes in order to prohibit passage of particles to be filtered out from the seawater. In other embodiments, the tube or straw may not or need not comprise any membrane material but may be made of other materials providing fine pores having the suitable passage sizes.

The inside channel (or inside duct of the tube) may collect the filtered water and may allow to transport the filtered water along the channel (in particular in a direction of a longitudinal axis of the respective tube upwards) from the longitudinal end of the respective tube to another longitudinal end of the respective tube, wherein the tube may in particular be oriented such that its longitudinal axis is arranged in a vertical direction. Thus, during a filtering procedure, unfiltered seawater may pass from an outside of a respective tube through the fine pores into the inside channel to become filtered and may then be transported vertically upwards to another end of the respective tube where the channel is not being closed such that the filtered water may exit the channel of the tube.

In particular, when the plurality of filter elements are arranged within a vessel, the vessel may comprise a bottom port and also a top port, wherein water to be filtered may enter at the bottom port and the filtered water may exit at the top port. Thereby, the filtered water exiting the inside channel of the tubes of the filter elements may be directed to the top port.

The seal system for closing the channels of the tubes at longitudinal ends (in particular vertically lower ends) of the respective tubes may comprise several seal system portions (e.g. each for a respective tube) or may comprise an integrally formed structure sealing all tubes, i.e. closing the respective channels of the tubes. The at least one opening of the seal system may comprise a small bushing or a short pipe that runs through the seal system in order to provide a communication between an outside of the plurality of filter elements and an inside of the plurality of filter elements. Alternatively, the at least one opening may be drilled into an integrally formed seal structure, e.g. manufactured from a resin material. The at least one opening may provide exactly one opening or more than one opening, such as two openings, three, four, five, six, seven, eight, nine, ten or ten to 100 openings, which may be distributed or arranged across an entire surface of the seal system (in particular a horizontal surface). The seal system further may have a function for fixing the plural filter elements such that they are supported close to each other and side by side.

In particular, the at least one opening may also be referred to as a center hole in the potting of the sealed end of the membrane element or filter element. By providing the at least one opening in the seal system, backwash water may flush out with high velocity and effectively remove all solid or particles piled up in the center of the filter element together with the solids at the brim of the element.

In particular, it has been observed that in a membrane cylinder comprising plural filter elements, particles, in particular solid particles, may enrich in an inside of the plurality of filter elements and may thereby clog the individual filter elements, in particular the fine pores. Furthermore, even during a cleaning procedure involving exposing the filter elements to bubble enriched water (in particular turbulent water), even if the solid particles adhering to the filter elements are released by the air bubble enriched water, the released particles may be trapped within a conventional membrane cylinder, because the released particles may not wash out from the membrane cylinder comprising the plurality of filter elements. By providing the at least one opening in the seal system, the released particles or the released debris may effectively leave the plurality of filter elements and may be removed from the plurality of filter elements, thereby improving the filter capacity of the plurality of filter elements and thereby in general improving the filtering arrangement.

In particular, the cleaning of the membrane elements (or filter elements) may be improved. Further benefits may be a reduced possibility for failures due to reduced lifetime, reduced need for chemical cleaning, improved ordinary cleaning and improved performance of the filter elements.

According to an embodiment of the present invention, the plurality of filter elements is arranged in a form of a circular cylinder, the at least one opening is arranged on a longitudinal axis of the cylinder in a center of the seal, wherein in particular the at least one opening is a single opening, wherein in particular the longitudinal ends of the tubes surround the opening in an annular manner.

The circular cylinder may also be referred to as membrane cylinder. The form of a circular cylinder may have advantages in that it may be possible to closely arrange plural filter elements close to each other, thereby improving the filter capacity and/or performance. To provide the at least one opening in the center of the seal system (i.e. in particular such that the at least one opening is surrounded by a same number of tubes in every radial direction), particles released from the tubes during a cleaning process may effectively be removed from the inside of the plurality of filter elements.

According to an embodiment of the present invention, the at least on opening comprises several openings arranged across a lateral extent of the seal perpendicular to longitudinal axes of the tubes, wherein in particular the opening has a circular cross section.

When several openings are provided within the seal system, released particles may selectively be removed from the inside of the plurality of filter elements, so that the filter capacity may be maintained or re-established by a cleaning procedure. In particular, the several openings may be distributed across the lateral extent of the seal system such that a higher density of openings (or a higher fraction of passage surface) is present at a first radial position than at a second radial position, wherein the second radial position is farther away radially from the longitudinal axis of the respective plurality of filter elements. In particular, the longitudinal axis of the plurality of filter elements may be a symmetry axis of the circular cylinder, when the plural filter elements are arranged in a form of a circular cylinder. Thereby, a higher amount of particles observed or expected at a center of the membrane cylinder may be accounted for.

According to an embodiment of the present invention, the seal system embeds the longitudinal ends of the tubes and closes spaces between the tubes at the longitudinal ends of the tubes, wherein in particular the seal system comprises solidified resin, wherein in particular the opening is made by drilling.

Manufacturing an arrangement for filtering water may comprise providing liquid resin and putting the plural filter elements with one longitudinal end into the liquid resin. Thereby, the respective channels of the tubes may be closed. Further on, the liquid resin may be allowed to solidify by cross-linking using an added cross-linking agent, in particular causing polymerization of the resin. Thereby, the longitudinal ends of the tubes may be fixed close to each other. Advantageously, in the solidified resin, the opening may be manufactured in an easy manner by drilling through the solidified resin.

According to an embodiment of the present invention, a support structure enclosing the plurality of filter elements, the support structure, in particular a grating, having a plurality of holes, in particular having a size between 5 mm x 5 mm and 10 mm x 10 mm, in particular 7 mm x 7 mm, wherein the plurality of filter elements further in particular comprises 5000 to 10000 filter elements.

The radial extent of the air distribution structure (or its diameter) may amount to between 50% and 100% of the radial extent of the internal space of the vessel. The air distribution passages within the air distribution structure may be drilled, when the air distribution structure is manufactured from glass reinforced epoxy or some other polymer. The air passages may have a circular cross-section. In particular, the air distribution structure may comprise between 100 and 150 air passages, in particular 108 air passages and those may all be oriented and distributed towards all membrane positions, i.e. the positions of the plural filter elements. In particular, the number of filter elements (i.e. circular cylinder filter elements each comprising plural straws comprising membrane material) may be equal to the number of air passages within the air distribution structure. Furthermore, the positions of the air distribution passages may be chosen in accordance with positions of the plural filter elements.

The invention may allow to producing a restriction that prevents air from moving direct upwards due to buoyancy within a liquid filled volume. A combination of curvature and calculated hole pattern (a positioning of holes) distributed in the curved shell may distribute the air horizontally instead of a normal vertical motion. By this arrangement it may be possible to have a simple horizontal gas distribution without introducing a lot of small mechanical air dispensers. The invention may also be robust with respect to mechanical strength and possible clogging that might occur in a piped air distribution system.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Embodiments of the present invention are now described with reference to the accompanying drawings.

### Brief Description of the Drawings

Fig. 1 schematically illustrates a perspective view of a filter system according to an embodiment of the present invention comprising a vessel according to an embodiment of the present invention and an arrangement for filtering water according to an embodiment of the present invention;
Fig. 2 schematically illustrates a perspective view of a portion of an arrangement for filtering water (also called membrane element) comprising plural filtering elements (also called straws) which may be used according to embodiments of the present invention e.g. in the filter system of Fig. 1;
Figs. 3A and 3B illustrate longitudinal end portions of arrangements for filtering water according to the prior art and according to an embodiment of the present invention, respectively;
Fig. 4 schematically illustrates a perspective view of a portion of a filter system according to an embodiment of the present invention including an air distribution structure;
Fig. 5 schematically illustrates an air distribution structure which may be used in embodiments of the present invention;
Fig. 6 schematically illustrates a perspective view of an air distribution structure including an air injector that can be used in embodiments according to the present invention;
Figs. 7 and 8 schematically illustrate perspective views of air distribution structures which can be used in embodiments of the present invention.

### Detailed Description

The illustration in the drawings is in schematic form. In the different drawings, reference signs relating to same or similar elements or structures are referenced with the same reference label differing only in the first digit. Therefore, for understanding a drawing in which a particular feature or element is not described in detail, the reader is referred to the description of this feature pertaining to another figure.

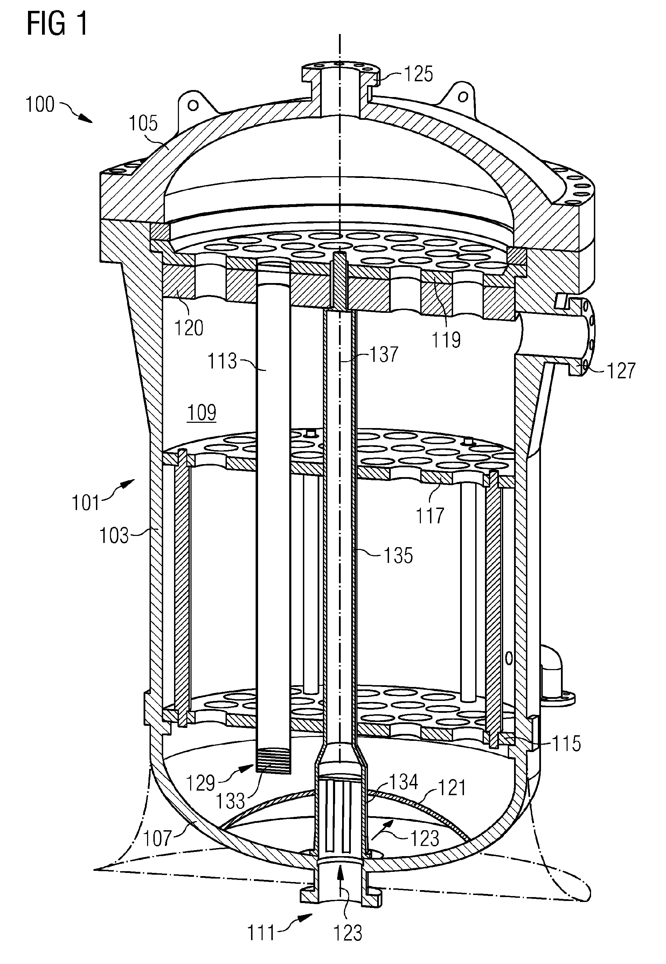

The filter system 100 as schematically illustrated in Fig. 1 in a perspective view includes a vessel 101 comprising a sidewall 103, an upper wall 105 and a lower wall 107 for enclosing an internal space 109. The vessel 101 further has a bottom port 111 (also called vessel opening or nozzle having a flange) which allows entry of air (during a cleaning procedure) or entry of water to be cleaned (during a filtering procedure). Within the vessel 101, the filter system 100 comprises a plurality of arrangements 113 for filtering water from which only one arrangement for filtering water is illustrated in Fig. 1. Normally, a large number of arrangements 113 for filtering water, such as for example 60 to 150, in particular 60 or 108 arrangements for filtering water are enclosed within the internal space 109 of the vessel 101. The plurality of arrangements 113 for filtering water are running through a lower plate 115, a middle plate 117 and an upper plate 119 which plates 115, 117, 119 (and support plate 120) have respective circular holes for allowing the cylindrically shaped arrangements 113 for filtering water to run through the plates 115, 117, 119.

The vessel 101 further comprises an air distribution structure 121 which encloses the port 111 and which is adapted to distribute air 123 introduced via the port 111 for reaching the plural arrangements 113 for filtering water across a larger area than five times a cross-sectional area of the port 111.

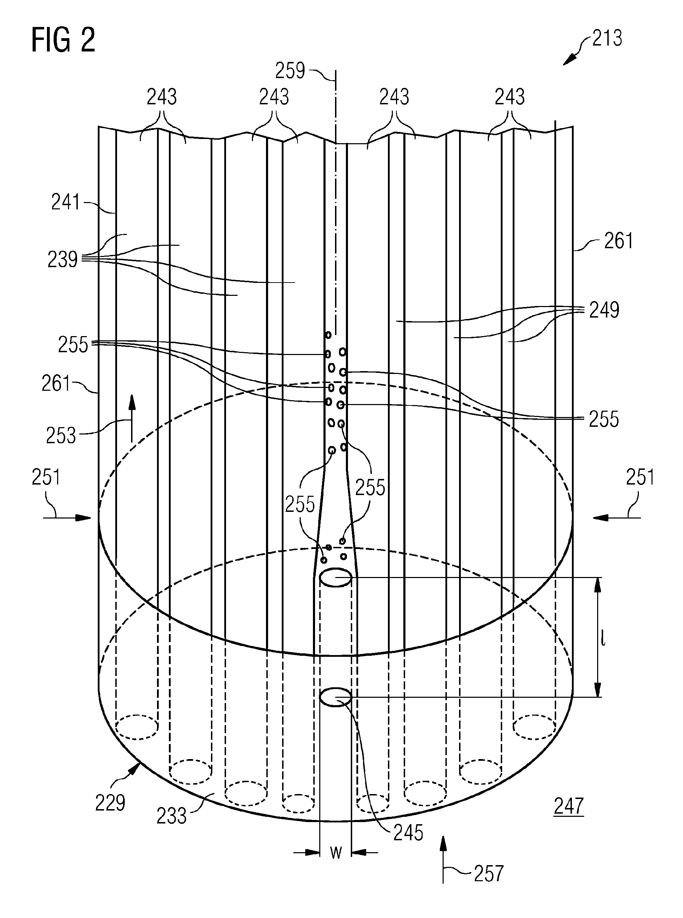

The filter system 100 further comprises a top port 125 (or vessel top opening) for allowing filtered water to leave the vessel 103 when the filter system 100 is operated in a filtering procedure or filtering mode. Furthermore, the vessel 101 comprises a side port 127 for different purposes, such as for allowing air to leave the vessel 101. The arrangement 113 for filtering water has a longitudinal end 129 (at the bottom end) and has another longitudinal end 131 (at the top end). Thereby, the longitudinal end 129 comprises a seal system 133 which will be described in more detail with reference to Fig. 2.

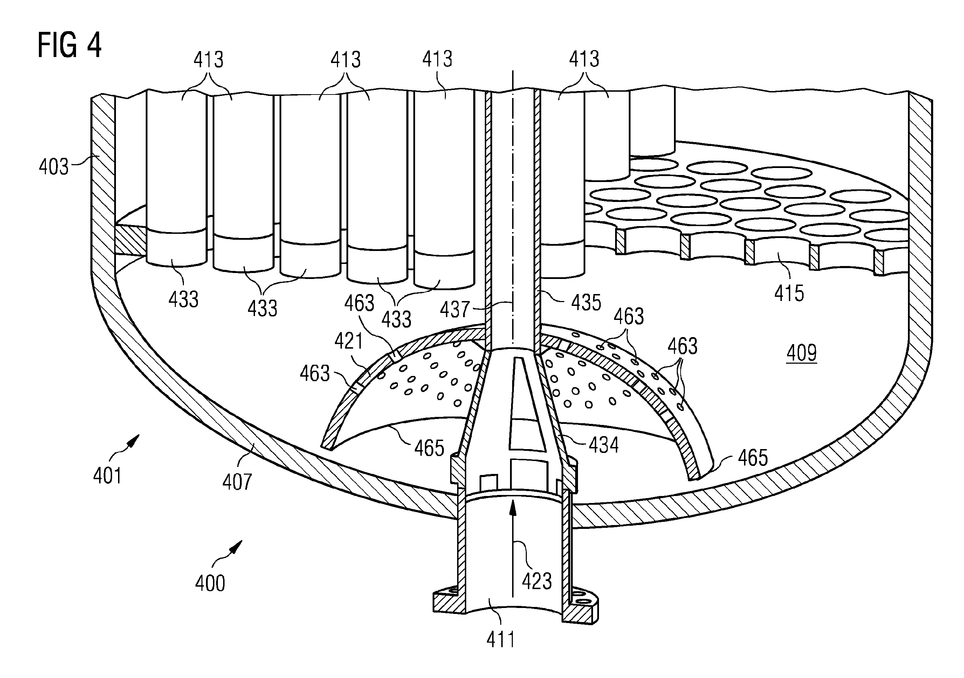

Furthermore, the air distribution structure 121 comprised in the filter system 100 will be described in further detail with respect to Figs. 4 to 8.

The filter system 100 illustrated in Fig. 1 further comprises an air injector or water injector 134 which allows air or water to be introduced via the port 111 into the internal space 109 of the vessel 101.

The filter system 100 further comprises a central bar 135 (which may be solid throughout) which is arranged at a central longitudinal axis 137 of the vessel 101 for supporting the plates 115, 117 and 119. Thereby, the central bar 135 as well as the air distribution structure 121 are made of glass reinforced epoxy (GRE) and are in particular integrally formed, i.e. one piece.

The filter system 100 may be operated during a filtering procedure and filter cleaning procedure above the sea level for example at a platform for filtering seawater during a gas/oil exploration application.

In Fig. 2, a lower or bottom portion of an arrangement 213 for filtering water (also called membrane element) is illustrated in a perspective view which may serve as the arrangement 113 comprised in the filter system 100 illustrated in Fig. 1. The arrangement 213 for filtering water comprises a plurality of filter elements (also called straws) 239 which are arranged side by side. The bundle of straws may also called an membrane element. Each of the filter elements or straws 239 comprises a tube 241 having not illustrated fine pores, allowing water to enter an inside channel 243 of the tube 241 but preventing particles having a size larger than a threshold size to enter the inside channel 243.

Further, the arrangement 213 for filtering water comprises a seal system (or potting) 233 for closing the channels 243 of the tubes 241 at the longitudinal ends 229 of the respective tubes 241. Thereby, the longitudinal ends are the bottom ends of the respective tubes 241. Thereby, the seal system 243 embeds the longitudinal end portions 229 of the filter elements 239 and comprises at least one opening 245 providing a communication (in particular flow of seawater in and out) between an outside 247 of the plurality of filter elements (or straw or tubes) 239 and an inside 249 of the plurality of filter elements 239, wherein the inside 249 is surrounded by tubes 241 but is being outside of the channels 243 of all the tubes 241.

As can be appreciated from Fig. 2, the plural filter elements 239 are oriented side by side and parallel to each other. Water 241 to be filtered may approach the filter elements 239 from the outer side and may pass through the fine pores of the tubes 241 into the inside channel 243 after filtering to become filtered water 253. The filtered water may then be transported inside the entire length of the straw or tube from the bottom end portion 229 to a top portion, may leave the respective channel 243 and may leave the filter system 100 via the top port 125, as is illustrated in Fig. 1.

During the filtering process, particles 255 having a size larger than the pore size of the fine pores of the filter elements 239 may adhere to outside surfaces of the tubes 241 and may tend to clog the membrane material of the tubes 241 i.e. the filter elements 239. Thereby, a filtering operation may be impaired. During a cleaning procedure of the filter elements 239, the filter elements 239 may be exposed to air enriched or air bubble enriched water 257 which may approach the arrangement 213 for filtering water from the bottom, in particular via entry of air 123 via the bottom port 111 which is then distributed by the air distribution structure 121, as is illustrated in Fig. 1.

The air bubble enriched water may cause vibrations and shaking of the filter elements 239 and may thereby result in release of the adhered particles 255 from the outside surface of the tube 241. The released particles 255 may fall downwards and in particular through the opening 245 and may thereby effectively be removed from the inside 249 of the arrangement 213 for filtering water.

As can be appreciated from Fig. 2, the plurality of filter elements 239 is arranged in a form of a circular cylinder and the opening 245 is arranged at a longitudinal axis 259 of the cylinder. As can be taken from Fig. 2, the tubes 241 surround the opening 245 and are in particular at least partially deformed such as to be bent away from the opening 245. In other embodiments of the present invention, more than one opening 245 is provided within the seal system 233. In the embodiment illustrated in Fig. 2, the seal system 233 is manufactured from solidified resin and the opening 245 is made by drilling.

The arrangement 213 for filtering water further comprises a support structure 261 enclosing the plurality of filter elements 239 and thereby forming an outside surface of the cylinder. Thereby, the support structure 261 strengthens the plural filter elements 239 and is made of a grating having plural holes to allow water entry. According to an embodiment of the present invention, around 6000 filter elements 239 are comprised in the arrangement 213 for filtering water.

A width w of the opening 245 may be between 5 mm and 15 mm and a length l of the opening 245 may amount to between 5 cm and 10 cm.

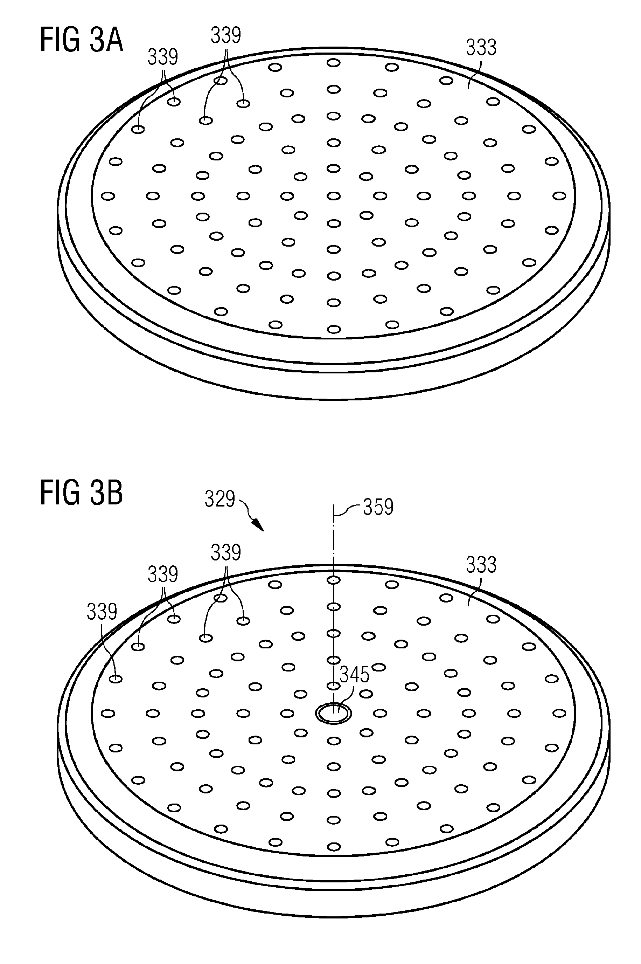

Fig. 3A illustrates a longitudinal end of an arrangement according to the prior art, while Fig. 3B illustrates the longitudinal end 329 of the arrangement 213 illustrated in Fig. 2. A seal system 333 embeds end portions of the filter elements 339 and an opening 345 is provided at the central symmetry axis 359 of the cylinder formed by the plural filter elements 339.

Fig. 4 schematically illustrates in a perspective view (partially broken away) of a portion of a filter system 400 comprising a plurality of arrangements 413 arranged parallel to each other and comprising a vessel 401 comprising an air distribution structure 421 and an air injector or water injector 434 which injects air or water 423 introduced via the port 411 into the internal space 409 of the vessel 401. Thereby, the air distribution structure 421 comprises a portion of a curved shell having plural air passages 463. In particular, the air distribution structure 421 comprises a retaining wall for retaining a portion of the air introduced in a region of the internal space 409 which is relatively close to the symmetry axis 437 of the vessel 401 and distributes this portion of air into regions of the internal space 409 which are farther away from the symmetry axis 437. The air distribution structure 421 has a circular edge 465 which is attached to an inside of the vessel 401 around the port 411.

As can be appreciated from Fig. 4, the air injector 434 has a conical shape and is attached to a central portion of the air distribution structure 421. Further, the central bar 435 is arranged at the central longitudinal axis 437 of the vessel 401 for supporting at least the bottom plate 415. In particular, the bar 435, the air distribution structure 421 and the air injector 434 are made of glass reinforced epoxy, in particular in an integral manner as a single piece. Also walls 103, 107 and 105 of the vessel 401 are made of glass reinforced epoxy.

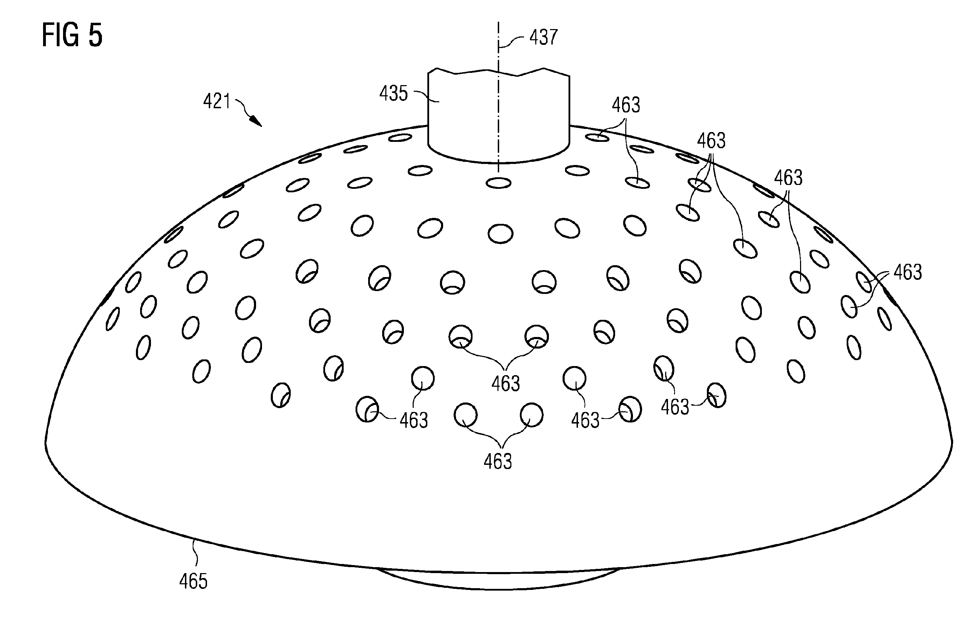

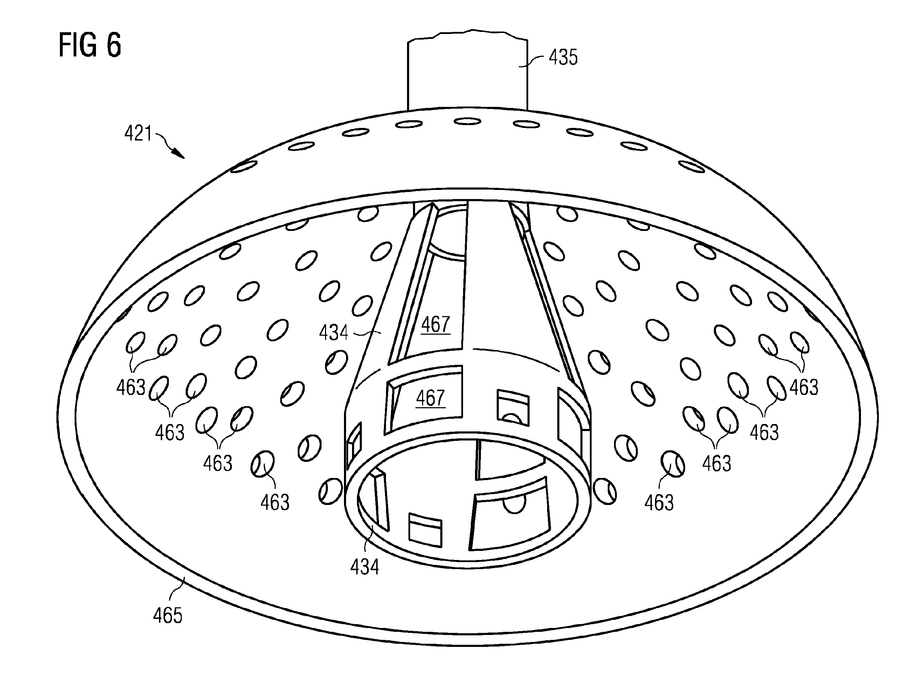

Fig. 5 schematically illustrates in a perspective upper view the air distribution structure 421 for illustrating the distribution of the air passages 463. As can be appreciated from Fig. 5 and also Fig. 6 showing the air distribution structure 421 in a bottom view, the number of air passages 463 increases with increasing distance from the longitudinal axis 437, to achieve an advantageous air distribution for cleaning the filter elements. In Fig. 6, also the air injector 434 is more clearly visible showing its large openings 467 and showing its taper shape.

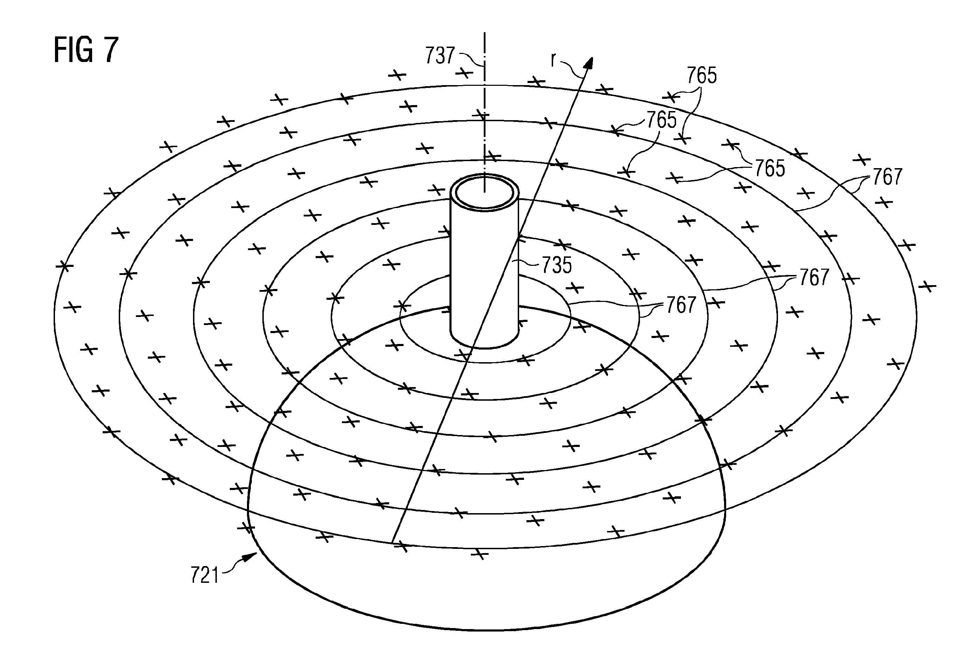

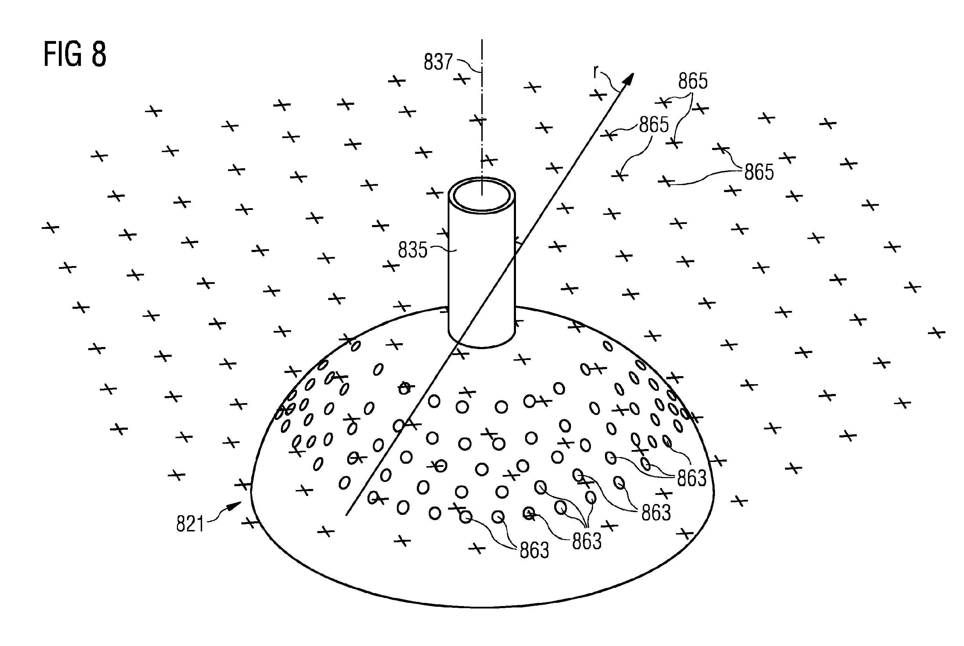

Figs. 7 and 8 illustrate further the distribution of air passages 863 in the air distribution structure 821 according to embodiments of the present invention. In particular, 108 air passages 863 are comprised in the air distribution structure 821 being integrally formed with the central bar 835. In other embodiments of the present invention, the width or size of the air passages 863 may vary with varying distance from the longitudinal axis 837 such that distribution of air to which the filter elements 413 or arrangements 413 for filtering water are exposed is more homogeneous than in conventional systems.

In Fig. 7 positions 765 of the plural filter elements arranged within the vessel when projected onto a plane perpendicular to the symmetry axis 737, 837 of the vessel, such as vessel 101 illustrated in Fig. 1 are illustrated. The projection positions 765, 865 belong to 108 filter elements disposed at different radial positions r (in Fig. 7 circles 767 having different radii are indicated). As can be taken from Fig. 8, to each of the projected positions 865, a respective air passage 863 is associated. Simulation of airflow through such an air distribution structure 821 may be employed in order to find appropriate positions of the air passages 863 such that air passing through a particular air passage reaches the associated filter element.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Vessel (101, 401), comprising:
an internal space (109, 409) for harbouring plural arrangements (113) for filtering water (251);
a port (111, 411) at a bottom side for allowing entry of air (123,423) into the internal space (109, 409) partially filled with water during a procedure for cleaning the plural arrangements (113, 413) for filtering water;
an air distribution structure (121, 421) enclosing the port (111, 411) and adapted to distribute air (123, 423) introduced via the port for reaching the plural arrangements (113, 413) for filtering water across a larger area than a cross sectional area of the port (111, 411).

2. Vessel according to claim 1, wherein the air distribution structure is adapted
to retain a portion of the air (123, 423) entered through the port (111, 411) from reaching first filter elements and
to direct the portion of the air (123, 423) to second filter elements radial farther away from the port than the first filter elements.

3. Vessel according to claim 1 or 2, wherein the air distribution structure (121, 421) comprises a retaining wall or portion of a shell comprising plane and/or curved portions, in particular of a spherical shell, in particular umbrella shaped, wherein the portion of the shell has air passages, in particular having a width between 25 mm and 50 mm.

4. Vessel according to one of the preceding claims, wherein a ratio between a sum of cross sectional areas of air passages (463, 863) in a area portion of the air distribution structure (121, 421, 821) and the area portion of the air distribution structure increases with increasing radial distance from the port.

5. Vessel according to claim 4, wherein a number of air passages (463, 863) and/or a width of the air passages (463, 863) increases with increasing radial distance from the port.

6. Vessel according to one of the preceding claims, wherein the air distribution structure (121, 421, 821) has a circular edge (465) attached at an inside of the vessel (401) around the port (411).

7. Vessel according to one of the preceding claims, further comprising:
an air injector (134, 434) arranged below the air distribution structure (121, 421) at the port (111, 411), the air injector (134, 434) supporting the air distribution structure (121, 421) at a center of the air distribution structure, in particular at a portion of the air distribution structure farthest away from the port in a flow direction of the air through the port.

8. Vessel according to claim 7, wherein the air injector (134, 434) has a conical shape tapering for larger axial distances from the port.

9. Vessel according to one of the preceding claims,
further comprising:
a central bar (135, 435) arranged at a central longitudinal axis (137, 437) of the vessel (101, 401) for supporting at least one plate (115, 117, 119; 415) through which the plural arrangements (113, 413) for filtering water run,
wherein in particular the air distribution structure (121, 421) is made of glass reinforced epoxy, further in particular integrally formed with the central bar.

10. Method for cleaning a filter system, the method comprising:
providing an internal space (109, 409) for harbouring plural arrangements (113, 413) for filtering water for filtering water;
allowing entry of air (123, 423) into the internal space (109, 409) partially filled with water via a port (111, 411);
distributing, via an air distribution structure (121, 421) enclosing the port (111, 411), the air introduced via the port for reaching the plural arrangements (113, 413) for filtering water across a larger area than, in particular five times, a cross sectional area of the port.

11. Filter system (100) for filtering water, in particular for injection into a bore well, the arrangement comprising:
a vessel (101, 401) according to one of claims 1 to 9;
at least one plurality of filter elements (239) arranged side by side, each filter element (239) comprising a tube (241) having fine pores, allowing water (251) to enter an inside channel (243) of the tube (241) but preventing particles (255) having a size larger than a threshold size to enter the inside channel (243), wherein the plurality of filter elements (239) being arranged above the air distribution structure (121, 421);
a seal system (133,233,433) for each of the at least one plurality of filter elements for closing the channels (243) of the respective tubes (241) at longitudinal ends (229) of the respective tubes,
wherein the seal system (233) has at least one opening (245) providing communication between an outside (247) of the plurality of filter elements (239) and an inside (249) of the plurality of filter elements (239), the inside (249) of the plurality of filter elements (239) being surrounded by tubes but being outside the channels (243) of all the tubes (241).

12. Filter system according to claim 11, wherein the plurality of filter elements (239) is arranged in a form of a circular cylinder, the at least one opening (245) is arranged on a longitudinal axis (259) of the cylinder in a center of the seal (233), wherein in particular the at least one opening (245) is a single opening,
wherein in particular the longitudinal ends (229) of the tubes (241) surround the opening (245) in an annular manner.

13. Filter system according to claim 11 or 12, wherein the at least on opening comprises several openings arranged across a lateral extent of the seal perpendicular to longitudinal axes of the tubes, wherein in particular the opening has a circular cross section.

14. Filter system according to one of claims 11 to 13,
wherein the seal system (233) embeds the longitudinal ends of the tubes and closes spaces between the tubes at the longitudinal ends of the tubes,
wherein in particular the seal system (233) comprises solidified resin, wherein in particular the opening is made by drilling.

15. Filter system according to one of claims 11 to 14, further comprising:
a support structure (261) enclosing the plurality of filter elements (239), the support structure, in particular a grating, having a plurality of holes, in particular having a size between 5 mm x 5 mm and 10 mm x 10 mm, in particular 7 mm x 7 mm, wherein the plurality of filter elements further in particular comprises 5000 to 10000 filter elements.
